# EUROPEAN PATENT APPLICATION

(11) **EP 3 896 992 A1**
(43) Date of publication of application: **20.10.2021**
(21) Application number: 20169667.1
(22) Date of filing: 15.04.2020
(51) Int. Cl.: H04R 1/10, H04W 52/02, H04W 56/00, H04W 84/20

(54) **PERSONAL AUDIO OUTPUT**

(71) Applicant: Nokia Technologies Oy, 02610 Espoo (FI)
(72) Inventor: LEPPÄNEN, Jussi Artturi, 33580 Tampere (FI); LEHTINIEMI, Arto Juhani, 33880 Lempäälä (FI); LAAKSONEN, Lasse Juhani, 33210 Tampere (FI); VILERMO, Miikka Tapani, 37200 Siuro (FI)
(74) Representative: Nokia EPO representatives

(57) **Abstract**

A system comprising:
a first wireless apparatus;
a second wireless apparatus;
wherein the first wireless apparatus is configured to wirelessly communicate with a third apparatus, either directly or via the second wireless apparatus, to receive first audio content and to provide audio output, dependent upon the received first audio content, to a first ear of a user;
wherein the second wireless apparatus is configured to wirelessly communicate with the third apparatus, either directly or via the first wireless apparatus, to receive second audio content and to provide audio output, dependent upon the received second audio content, to a second ear of the user;
wherein in a first mode the first wireless apparatus wirelessly communicates with the third apparatus, either directly or via the second wireless apparatus, to receive first audio content and to provide audio output, dependent upon the received first audio content and the second wireless apparatus wirelessly communicates with the third apparatus, either directly or via the first wireless apparatus, to receive second audio content and to provide audio output, dependent upon the received second audio content;
wherein in a second power-saving mode only one of the first wireless apparatus and the second wireless apparatus wirelessly communicates with the third apparatus to receive audio content and to provide audio output, dependent upon the received audio content; and wherein the system is configured to switch from the first mode to the second power-saving mode to save power.

## Description

### TECHNOLOGICAL FIELD

Embodiments of the present disclosure relate to personal audio output.

### BACKGROUND

A pair of wireless earbuds are now commonly used for personal audio listening. Each bud is a wireless apparatus that is shaped and configured for placement at least partially within an ear canal of a user for audio output to the user.

A trade-off may need to be made by a manufacturer between size of the wireless earbuds and battery capacity.

It is therefore possible for earbuds to have insufficient energy stored in their batteries for extended use.

### BRIEF SUMMARY

According to various, but not necessarily all, embodiments there is provided a system comprising:
a first wireless apparatus;
a second wireless apparatus;
wherein the first wireless apparatus is configured, at least, to wirelessly communicate with a third apparatus, either directly or via the second wireless apparatus, to receive first audio content and to provide audio output, dependent upon the received first audio content, to a first ear of a user;
wherein the second wireless apparatus is configured at least to wirelessly communicate with the third apparatus, either directly or via the first wireless apparatus, to receive second audio content and to provide audio output, dependent upon the received second audio content, to a second ear of the user;
wherein in a first mode the first wireless apparatus wirelessly communicates with the third apparatus, either directly or via the second wireless apparatus, to receive first audio content and to provide audio output, dependent upon the received first audio content and the second wireless apparatus wirelessly communicates with the third apparatus, either directly or via the first wireless apparatus, to receive second audio content and to provide audio output, dependent upon the received second audio content;
wherein in a power-saving mode only one of the first wireless apparatus and the second wireless apparatus wirelessly communicates with the third apparatus to receive audio content and to provide audio output, dependent upon the received audio content; and
wherein the system is configured to switch from the first mode to the second power-saving mode to save power.

In some but not necessarily all examples, the first wireless apparatus comprises a first energy store for powering the first wireless apparatus;
wherein the second wireless apparatus comprises a second energy store for powering the second wireless apparatus;
wherein the switch to the power-saving mode reduces power consumption in one of the first and second wireless apparatuses more than the other one of the first and second wireless apparatuses by at least reducing power consumed for wireless communication.

In some but not necessarily all examples, the system is configured to select which of the first wireless apparatus and the second wireless apparatus wirelessly communicates, in the power-saving mode, with the third apparatus to receive audio content and to provide audio output, dependent upon the received audio content, wherein the selection is dependent upon a monitored storage value for the first energy store and a monitored storage value for the second energy store.

In some but not necessarily all examples, the system is configured to:
initially select one of the first wireless apparatus and the second wireless apparatus to wirelessly communicate with the third apparatus to receive audio content and to provide audio output, dependent upon the received audio content, in the power-saving mode; and
subsequently select the other one of the first wireless apparatus and the second wireless apparatus to wirelessly communicate with the third apparatus to receive audio content and to provide audio output, dependent upon the received audio content, in the power-saving mode,
wherein one or both of the initial selection and the subsequent selection are dependent upon a monitored storage value for the first energy store and/or a monitored storage value for the second energy store.

In some but not necessarily all examples, the system is configured to provide, to the user, an audio output indicative of a change in mode from the first mode to the power-saving mode. In some but not necessarily all examples, the system is configured to enable user input commands to at least partially control the power-saving mode and or a transition to or from the power-saving mode.

In some but not necessarily all examples, the system is configured to:
cancel or suspend a switch to the power-saving mode;
change a threshold criterion for a transition to the power-saving mode; or
select which of the first wireless apparatus and the second wireless apparatus wirelessly communicates, in the power-saving mode, with the third apparatus to receive audio content and to provide audio output, dependent upon the received audio content.

In some but not necessarily all examples, on entering the power-saving mode, in the absence of a user input command, the one of the first wireless apparatus and the second wireless apparatus that does not wirelessly communicates with the third apparatus to receive audio content and to provide audio output, dependent upon the received audio content, is configured to fade out its audio output and to place its wireless transceiver in a low-power mode.

In some but not necessarily all examples, the user input commands are dependent upon the first and/or second audio content.

In some but not necessarily all examples, the user input commands enable the system to prevent a transition from the first mode to the power-saving mode or enables a transition from the power-saving mode back to the first mode.

In some but not necessarily all examples, one user input command is a tap gesture within a threshold period of time after a transition from the first mode to the power-saving mode.

In some but not necessarily all examples, one user input command is a touch-and-hold gesture.

In some but not necessarily all examples, the first wireless apparatus is a wireless bud comprising a housing shaped and configured for placement at least partially within an ear canal of a user and wherein the second wireless apparatus is a wireless bud comprising as a housing shaped and configured for placement at least partially with an ear canal of a user.

In some but not necessarily all examples, in the power-saving mode, an operational one of the first wireless apparatus and the second wireless apparatus wirelessly communicates with the third apparatus to receive audio content and to provide audio output, dependent upon the received audio content and the other non-operational one of the first wireless apparatus and the second wireless apparatus does not wirelessly communicate with the third apparatus to receive audio content and does not provide audio output, dependent upon the received audio content
wherein
the operational wireless apparatus maintains synchronous communication and network synchronization
and wherein the non-operational wireless apparatus does not maintain synchronous communication and maintains network synchronization;

According to various, but not necessarily all, embodiments there is provided a wireless apparatus for use in the system, the wireless apparatus comprising means for:
enabling an operational state in which the wireless apparatus wirelessly communicates with the third apparatus to receive first audio content and to provide audio output, dependent upon the received first audio content;
enabling a non-operational state in which the wireless apparatus does not wirelessly communicate with the third apparatus to receive first audio content and does not provide audio output, dependent upon the received first audio content;
switching from the operational state to the non-operational state to conserve stored energy during the power-saving mode; and
switching from the non-operational state, during the power-saving mode, to the operational state to maintain audio output.

According to various, but not necessarily all, embodiments there is provided program instructions for causing an apparatus to perform at least the following:
in a first mode,
enabling a first wireless apparatus to wirelessly communicate with a third apparatus, either directly or via a second wireless apparatus, to receive first audio content and to provide audio output, dependent upon the received first audio content, to a first ear of a user, and
enabling a second wireless apparatus to wirelessly communicate with the third apparatus, either directly or via the first wireless apparatus, to receive second audio content and to provide audio output, dependent upon the received second audio content, to a second ear of the user;
switch from the first mode to the second power-saving mode to save power in which only one of the first wireless apparatus and the second wireless apparatus wirelessly communicates with the third apparatus to receive audio content and to provide audio output, dependent upon the received audio content to a respective ear of the user.

According to various, but not necessarily all, embodiments there is provided examples as claimed in the appended claims.

### BRIEF DESCRIPTION

Some examples will now be described with reference to the accompanying drawings in which:
FIG 1 shows an example of the subject matter described herein;
FIG 2 shows another example of the subject matter described herein;
FIG 3 shows another example of the subject matter described herein;
FIG 4A shows another example of the subject matter described herein;
FIG 4B shows another example of the subject matter described herein;
FIG 5 shows another example of the subject matter described herein;
FIG 6A, 6B, 6C, 6D show another example of the subject matter described herein;
FIG 7 shows another example of the subject matter described herein;
FIG 8 shows another example of the subject matter described herein; and
FIG 9 shows another example of the subject matter described herein.

### DETAILED DESCRIPTION

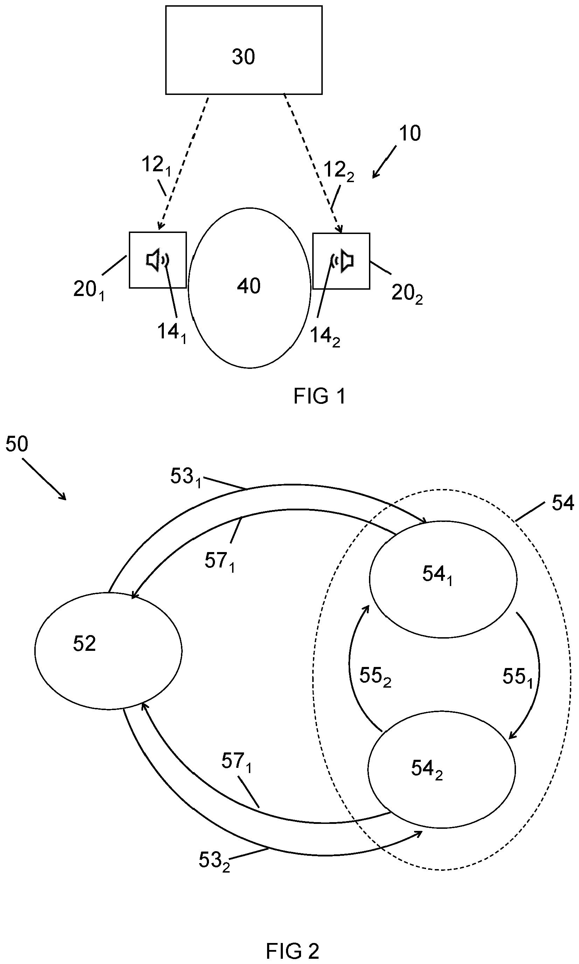

FIG 1 illustrates an example of a system 10 comprising a pair of wireless apparatus 20- a first wireless apparatus 20₁ and a second wireless apparatus 20₂.

The first wireless apparatus 20₁ is configured to wirelessly communicate with a third apparatus 30, either directly or indirectly via the second wireless apparatus 20₂, to receive first audio content 12₁ and to provide first audio output 14₁, dependent upon the received first audio content 12₁, to a first ear of a user 40.

The second wireless apparatus 20₂ is configured to wirelessly communicate with the third apparatus 30, either directly or indirectly via the first wireless apparatus 20₁, to receive second audio content 12₂ and to provide second audio output 14₂, dependent upon the received second audio content 12₂, to a second ear of the user 40.

As illustrated in FIG 2 the system 10 has at least two different modes of operation- a first mode 52 and a power-saving mode 54. The system 10 is configured to switch, via transition 53 (e.g. 53₁, 53₂), from the first mode 52 to the power-saving mode 54 to save power.

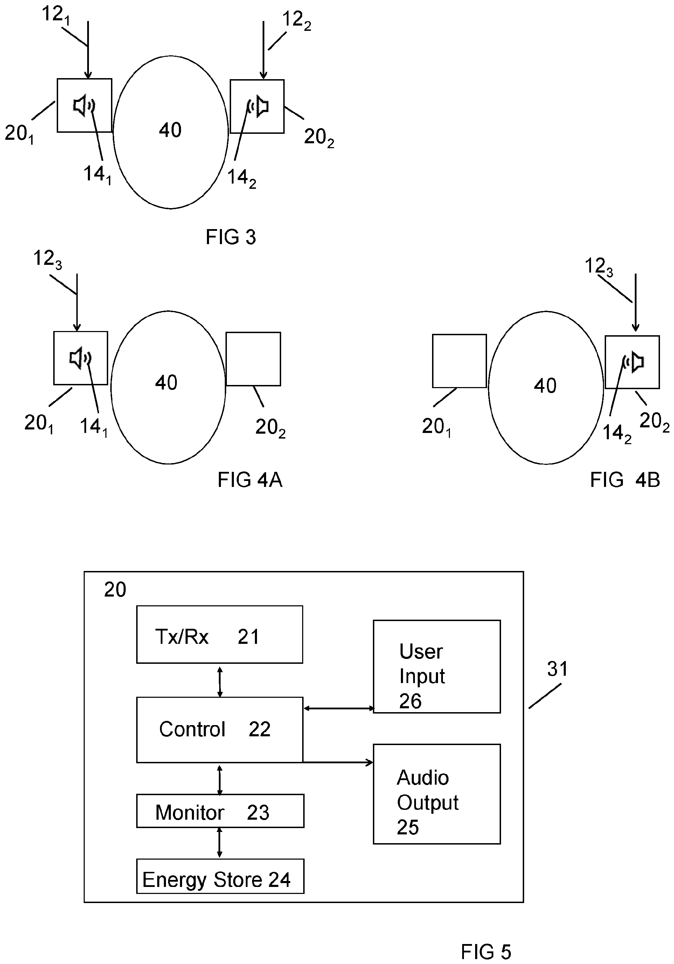

FIG 3 illustrates an example of the first mode 52. The first wireless apparatus 20₁ wirelessly communicates with the third apparatus 30 (not illustrated), either directly or via the second wireless apparatus 20₂, to receive first audio content 12₁ and to provide first audio output 14₁, dependent upon the received first audio content 12₁. The second wireless apparatus 20₂ wirelessly communicates with the third apparatus 30 (not illustrated), either directly or via the first wireless apparatus 20₁, to receive second audio content 12₂ and to provide second audio output 14₂, dependent upon the received second audio content 12₂. The first audio content 12₁ and the second audio content 12₂ can be the same or different.

FIG 4A and 4B illustrate examples of the power-saving mode 54.
In the power-saving mode 54 one (or both) of the first wireless apparatus 20₁ and the second wireless apparatus 20₂ operate differently to reduce power consumption. Examples of changes in operation can, for example, include:
- lowering audio volume of a wireless apparatus;
- turning-off a radio transceiver of a wireless apparatus 20 at least periodically and muting audio of the wireless apparatus 20;
- reducing radio transducer power consumption of a wireless apparatus 20 and muting audio of the wireless apparatus 20
- lowering bitrate of the audio that is transmitted to a wireless apparatus 20.

In some examples, in the power-saving mode 54 only one of the first wireless apparatus 20₁ and the second wireless apparatus 20₂ provides audio output 14₁, 14₂ to save power consumption.

In one example, in the power-saving mode 54 the first wireless apparatus 20₁ and the second wireless apparatus 20₂ wirelessly communicate with the third apparatus 30 (not illustrated) but only one of the first wireless apparatus 20₁ and the second wireless apparatus 20₂ provides audio output 14₁, 14₂.

In another example in the power-saving mode 54 only one of the first wireless apparatus 20₁ and the second wireless apparatus 20₂ wirelessly communicates with the third apparatus 30 (not illustrated) to receive audio content 12₃ and to provide first and second audio output 14₁, 14₂ dependent upon the received audio content 12₃.

For example, in the power-saving mode 54, only one of the first wireless apparatus 20₁ and the second wireless apparatus 20₂ is operational and wirelessly communicates with the third apparatus 30 to receive audio content and to provide audio output, dependent upon the received audio content. The other of the first wireless apparatus 20₁ and the second wireless apparatus 20₂ is non-operational and does not wirelessly communicates with the third apparatus 30 to receive audio content and does not provide audio output, dependent upon the received audio content.

The operational wireless apparatus 20 has a radio transceiver that may operate in a higher power consumption mode than a radio transceiver of the non-operational wireless apparatus 20.

The non-operational wireless apparatus 20 has a radio transceiver that may operate in a lower power consumption mode than a radio transceiver of the operational wireless apparatus 20 or that does not operate.

In the example of FIG 4A (the first power-saving mode 54₁), the first wireless apparatus 20₁ is operational and the second wireless apparatus 20₂ is non-operational. Only the first wireless apparatus 20₁ wirelessly communicates directly with the third apparatus 30 (not illustrated) to receive audio content 12₃ and to provide first audio output 14₁, dependent upon the received audio content 12₃. In some examples, the audio content 12₃ is the first audio content 12₁. In other examples, the audio content 12₃ is a mix of the first audio content 12₁ and the second audio content 12₂.

In the example of FIG 4B (the second power-saving mode 54₂), the second wireless apparatus 20₂ is operational and the first wireless apparatus 20₁ is non-operational. Only the second wireless apparatus 20₂ wirelessly communicates directly with the third apparatus 30 (not illustrated) to receive audio content 12₃ and to provide second audio output 14₂, dependent upon the received audio content 12₃. In some examples, the audio content 12₃ is the second audio content 12₂. In other examples, the audio content 12₃ is a mix of the first audio content 12₁ and the second audio content 12₂.

FIG 5 illustrates an example of a wireless apparatus 20. It could be the first wireless apparatus 20₁ or the second wireless apparatus 20₂.

The wireless apparatus 20 comprises a radio transceiver 21 for communicating with the third apparatus 30, and/or the third apparatus 30 and another wireless apparatus 20.

In some but not necessarily all examples the radio transceiver 21 can operate in a higher performance mode or a lower performance mode that consumes less energy.

The wireless apparatus 20 comprises a controller 22 for controlling an audio output transducer 25 to provide an audio output in dependence upon audio content received from the radio transceiver 21.

In some examples, the wireless apparatus 20 comprises a user input device 26. This can, for example, be a touch or proximity sensitive area on an exterior portion of a housing 31 of the wireless apparatus 20.

The wireless apparatus 20 comprises an energy store 24, such as Li-Ion or Li-Po battery, for powering the wireless apparatus 20.

Therefore, the first wireless apparatus 20₁ comprises a first energy store for powering the first wireless apparatus 20₁ and the second wireless apparatus 20₂ comprises a second energy store for powering the second wireless apparatus 20₂. The switch to the power-saving mode 54 reduces power consumption in one of the first and second wireless apparatuses 20₁, 20₂ more than the other by at least reducing power consumed. This reduction in power consumed can, for example, arise from placing circuitry in a mode that consumes less power. For example, amplifiers may be switched-off. For example, audio rendering may be stopped. For example, the power consumed by the radio transceiver 21 to enable wireless communication is reduced. This can, for example, be achieved by changing the performance mode of the radio transceiver 21 from higher performance to lower performance or turning off the radio transceiver 21.

The wireless apparatus 20 can also comprise monitoring circuitry 23 configured to monitor a storage value of the energy store 24.

In some but not necessarily all examples, the system 10 is configured to select which of the first wireless apparatus 20₁ and the second wireless apparatus 20₂ is operational and which is non-operational in dependence upon a monitored storage value for the first energy store 24 and a monitored storage value for the second energy store 24.

For example, if a monitored storage value for the energy store 24 of the first wireless apparatus 20₁ or a monitored storage value for the energy store 24 of the second wireless apparatus 20₂ decreases below a first threshold, then the system 10 responds by switching from the first mode 52 to the power-saving mode 54.

In other examples, if a monitored storage value for the energy store 24 of the first wireless apparatus 20₁ and a monitored storage value for the energy store 24 of the second wireless apparatus 20₂ both decrease below a first threshold, then the system 10 responds by switching from the first mode to the power-saving mode 54.

FIG 2 illustrates an example of a state transition diagram 50, it illustrates different transitions 53, 57 between the first mode (first state) 52 and the power-saving mode (second state) 54.

In the first mode 52, the first wireless apparatus 20₁ is operational and the second wireless apparatus 20₂ is operational. The first wireless apparatus 20₁ wirelessly communicates with the third apparatus 30, either directly or via the second wireless apparatus 20₂, to receive first audio content 12₁ and to provide first audio output 14₁, dependent upon the received first audio content 12₁. The second wireless apparatus 20₂ wirelessly communicates with the third apparatus 30, either directly or via the first wireless apparatus 20₁, to receive second audio content 12₂ and to provide second audio output 14₂, dependent upon the received second audio content 12₂.

In the power-saving mode 54, one of the first wireless apparatus 20₁ and the second wireless apparatus 20₂ is operational and the other one of the first wireless apparatus 20₁ and the second wireless apparatus 20₂ is non-operational. In this particular example, in the power-saving mode 54 only one of the first wireless apparatus 20₁ and the second wireless apparatus 20₂ is operational and wirelessly communicates with the third apparatus 30 to receive audio content 12₃ and to provide audio output, dependent upon the received audio content. The other of the first wireless apparatus 20₁ and the second wireless apparatus 20₂ is non-operational and does not wirelessly communicate with the third apparatus 30 to receive audio content and does not provide audio output, dependent upon the received audio content.

In a first power-saving mode 54₁, the first wireless apparatus 20₁ is operational and the second wireless apparatus 20₂ is non-operational. Only the first wireless apparatus 20₁ wirelessly communicates directly with the third apparatus 30 to receive audio content 12₃ and to provide first audio output 14₁, dependent upon the received audio content 12₃.

In a second power-saving mode 54₂, the second wireless apparatus 20₂ is operational and the first wireless apparatus 20₁ is non-operational. Only the second wireless apparatus 20₂ wirelessly communicates directly with the third apparatus 30 to receive audio content 12₃ and to provide second audio output 14₂, dependent upon the received audio content 12₃.

The system 10 is configured to switch, via transition 53, from the first mode 52 to the power-saving mode 54 to save power. For example, a transition 53₁ switches from the first mode 52 to the first power-saving mode 54₁ to save power. For example, a transition 53₂ switches from the first mode 52 to the second power-saving mode 54₂ to save power.

The system 10 can be configured to initially switch (transition 53₁) from the first mode 52 to the first power-saving mode 54, and then subsequently switch (transition 55₁) from the first power-saving mode 54, to the second power-saving mode 54₂.

The system 10 can be configured to switch (transition 53₂) from the first mode 52 to the second power-saving mode 54₂ and then subsequently switch (transition 55₂) from the second power-saving mode 54₂ to the firstpower-saving mode 54₁.

Which one of the first wireless apparatus 20₁ and the second wireless apparatus 20₂ is initially selected to be operational and which one is selected to be non-operational in the power-saving mode 54, can be dependent upon a monitored storage value for the first energy store and/or a monitored storage value for the second energy store, audio content or a user programmed preference.

In some but not necessarily all examples, the switch from the first mode 52 to the power-saving mode 54is triggered by a monitored storage value for the energy store of the first wireless apparatus 20₁ or a monitored storage value for the energy store of the second wireless apparatus 20₂ falling below a first threshold. In one example, if the monitored storage value for an energy store of the first wireless apparatus 20₁ falls below the first threshold, then the second power-saving mode 54₂ is triggered and the first wireless apparatus 20₁ becomes non-operational and the second wireless apparatus 20₂ remains operational.

The first threshold can in some examples be a percentage of the total storage capacity of the energy store e.g. 20% or 15% or 10% or 5% of the total storage capacity of the energy store. The first threshold can in some examples be a remaining operating time e.g. 15 or 10 minutes of remaining operating time. In some but not necessarily all examples the first threshold is a dynamic parameter. For example, in some but not necessarily all examples it can de dependent upon the audio content being rendered (e.g. time remaining). In some but not necessarily all examples it can be dependent upon user input. The user input can, for example, control one or more of the value of the first threshold, whether it is based on a percentage of energy remaining or remaining operating time, or whether it varies with audio content.
In some but not necessarily all examples, the switch from the first mode 52 to the power-saving mode 54is triggered by a monitored storage value for the energy store of the first wireless apparatus 20₁ and a monitored storage value for the energy store of the second wireless apparatus 20₂ falling below a first threshold. In one example, if the monitored storage value for an energy store of the first wireless apparatus 20₁ falls below the first threshold and the monitored storage value for an energy store of the second wireless apparatus 20₂ falls below the first threshold, then either the first power-saving mode 54₁ or the second power-saving mode 54₂ is triggered and one of the wireless apparatus 20₁, 20₂ becomes non-operational and the other wireless apparatus 20₂,20₁ remains operational.

The other one of the first wireless apparatus 20₁ and the second wireless apparatus 20₂, which was initially selected to be non-operational, can be subsequently selected (transition 55) to be operational in the power-saving mode 54, in dependence upon a monitored storage value for the energy store of the first wireless apparatus 20₁ and/or the energy store of the second wireless apparatus 20₂.

In some but not necessarily all examples, the switch (transition 55₁) from the first power-saving mode 54₁ to the second power-saving mode 54₂ is triggered by a monitored storage value for the energy store 24 of the first wireless apparatus 20₁ falling below a second threshold.

The second threshold is less than the first threshold. In some examples the second threshold can be a percentage of the first threshold e.g. 20% or 15% or 10% or 5%. In some examples the second threshold can be a percentage of the total storage capacity of the energy store e.g. 2% or 1%. In some examples the second threshold can be a remaining operating time e.g. 5 , 3, 2 or 1 minute of remaining operating time. In some but not necessarily all examples the threshold is a dynamic parameter. For example, in some but not necessarily all examples it can be dependent upon the audio content being rendered (e.g. time remaining of stereo or spatial audio content). In some but not necessarily all examples it can be dependent upon user input. The user input can, for example, control one or more of the value of the second threshold, whether it is based on a percentage of energy remaining or remaining operating time, or whether it varies with audio content.

In some but not necessarily all examples, the switch (transition 55₂) from the second power-saving mode 54₂ to the first power-saving mode 54₁ is triggered by a monitored storage value for the energy store 24 of the second wireless apparatus 20₂ falling below a second threshold.

Thus, after an energy store 24 (e.g. battery) runs out on an operational wireless apparatus 20, in the power-saving mode 54, the other wireless apparatus 20 is switched from non-operational to operational. The same content that was output from the initially operational one of the first and second wireless apparatus 20 can then be output, after the switch (transition 55), from the subsequently operational one of the first and second wireless apparatus 20₁, 20₂.

The wireless apparatus 20 can be a wireless earbud. The wireless apparatus 20 can comprise a housing 31 shaped and configured for placement at least partially with an ear canal of a user 40.

The first wireless apparatus 20₁ and the second wireless apparatus 20₂ are not connected to each other by wires.

The first wireless apparatus 20₁ and the second wireless apparatus 20₂ have independent energy stores and energy cannot be transferred from one energy store to the other while they are in use.

The first wireless apparatus 20₁ and the second wireless apparatus 20₂ are designed for use as a pair- one for a left ear and one for a right ear. The first wireless apparatus 20₁ and the second wireless apparatus 20₂ can have markings such as 'L' or 'R' to indicate whether it is intended for use in a left ear or a right ear.

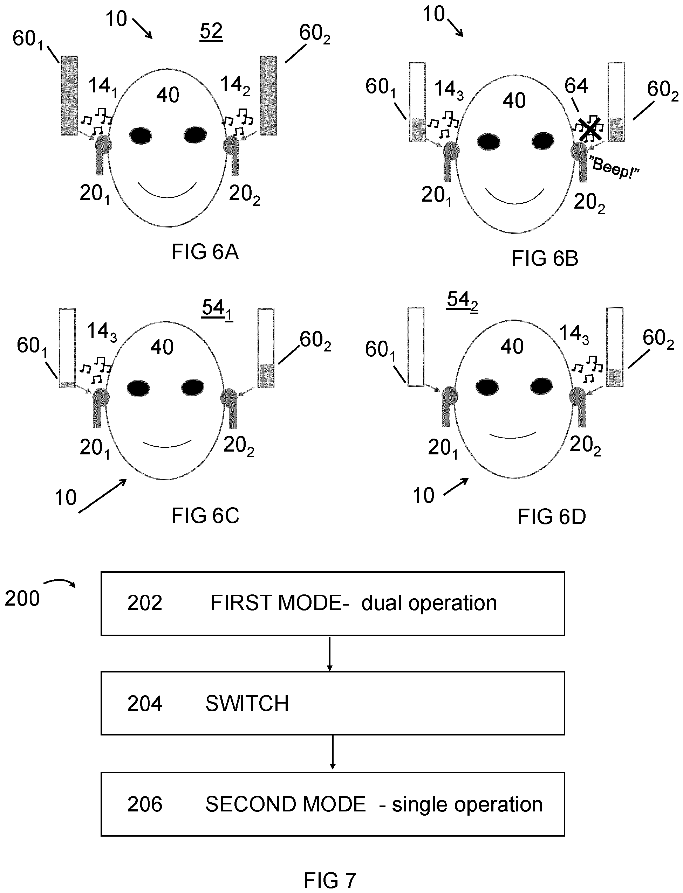

FIGs 6A, 6B, 6C, 6D illustrate a timeline. The system 10 is initially in the first mode 52 (FIG 6A). The system 10 is then switching from the first mode to the first power-saving mode 54₁, because a monitored storage value for the energy store of the second wireless apparatus 20₂ is falling below a first threshold (FIG 6B). The system is then in the first power-saving mode 54₁ in which the first wireless apparatus 20₁ is operational and the second wireless apparatus 20₂ is non-operational (FIG 6C). Subsequently the system 10 switches from the first power-saving mode 54₁ to the second power-saving mode 54₂ in which the second wireless apparatus 20₂ is operational and the first wireless apparatus 20₁ is non-operational, because a monitored storage value for the energy store 24 of the first wireless apparatus 20₁ falls below a second threshold (FIG 6D).

The second threshold can be as described above.

In this example, and other examples, the first wireless apparatus 20₁ is a right-ear device and the second wireless apparatus 20₂ is a left-ear device. However, the first wireless apparatus 20₁ could alternatively be a left-ear device and the second wireless apparatus 20₂ a right-ear device.

The FIGs show for the purposes of explanation, a contemporaneous monitored storage value 60₁ for the energy store 24 of the first wireless apparatus 20₁ and a contemporaneous monitored storage value 60₂ for the energy store 24 of the second wireless apparatus 20₂.

In this example, the monitored storage value 60₁, 60₂ for the energy store 24 of one or both of wireless apparatus 20₁, 20₂ decreases below a first threshold (FIG 6B), and the system 10 responds by switching from the first mode 52 to the first power-saving mode 54₁ (FIG 6C).

In this example, the monitored storage value 60₁ for the energy store 24 of the operational first wireless apparatus 20₁ decreases below a second threshold, lower than the first threshold, and the system 10 responds by switching from the first power-saving mode 54₁ to the second power-saving mode 54₂ making the operational first wireless apparatus 20₁ non-operational and making the non-operational second wireless apparatus 20₂ operational (FIG 6D).

In this example, and in other examples, the system 10 produces a differential audio output indication 64 to a user 40 when there is a change in mode, for example, a change in mode from the first mode 52 to the power-saving mode 54. The differential audio output indication 64 comprises a comparatively different audio output to the user 40 from the first and second wireless apparatuses 20₁, 20₂, the difference indicating audibly to the user 40 which one of the first wireless apparatus 20₁ and the second wireless apparatus 20₂ is to be operational and provide audio output, dependent upon received audio content.

In the illustrated example, the user 40 is played an indicator beep or beeps (a differential audio output indication 64) from the wireless apparatus 20 that is to be initially non-operational in the power-saving mode 54.

Alternatively, the user 40 can for example be played an indicator beep or beeps from the wireless apparatus 20 that is to be initially operational in the power-saving mode 54.

The system 10 can also produce a differential audio output indication 64 to a user 40 when there is for example, a change in mode between the first power-saving mode 54₁ and the second power-saving mode 54₂ or vice versa.

In the example illustrated, in the first mode 52 stereo audio is rendered to the user. First audio content 12₁ for a right-ear audio channel is played, as first audio output 14₁, via the first wireless apparatus 20₁ at the right ear of the user 40. Second audio content 12₂ for a left-ear audio channel is played, as second audio output 14₂, via the second wireless apparatus 20₂ at the left ear of the user 40. In the power-saving modes 54 mono audio output 14₃ is rendered to the user. The right-ear audio channel and the left-ear audio channel are, in this example, evenly mixed to produce mono audio output 14₃ for a mono channel which is played via the first wireless apparatus 20₁ at the right ear of the user 40 during the first power-saving mode 54₁ and via the second wireless apparatus 20₂ at the left ear of the user 40 during the second power-saving mode 54₂.

In the other examples, in the first mode 52, mono audio is rendered to the user. Audio output 14₁, 14₃ played via the first wireless apparatus 20₁ at the right ear of the user 40 and audio output 14₂, 14₃ played via the second wireless apparatus 20₂ at the left ear of the user 40 are the same in the first mode 52 and the power-saving mode 54. The same audio content is played irrespective of mode and irrespective of wireless apparatus.

The system 10 can be configured to enable user input commands, for example via the user input device 26 (FIG 5), to at least partially control the power-saving mode 54 and or a transition 53, 57to or from the power-saving mode 54 (FIG 2).

For example, a user input command can be used to override the power-saving mode 54 altogether or temporarily. It can, for example, cancel or suspend a transition53 to the power-saving mode 54.

In some but not necessarily all examples, a user input command changes, for example lowers, a first threshold criterion for a transition 53 to the power-saving mode. This can be achieved by cancelling the transition 53 or reversing the transition 53 using a return transition 57. This has the effect of temporarily suspending the transition 53 to the power-saving mode 54.

In some but not necessarily all examples, a user input command selects which of the first wireless apparatus 20₁ and the second wireless apparatus 20₂ is be operational in the power-saving mode 54 (or is to be non-operational in the power-saving mode 54). This allows the user to select between the first and second power-saving modes 54₁, 54₂.

In some but not necessarily all examples, a user input command can prevent a transition to the power-saving mode 54.

In some but not necessarily all examples, a user input command can confirm a transition to the power-saving mode 54.

While the above user input commands have been described as controlling transitions between the first mode 52 and the power-saving mode 54, the same user input command(s) can be used to control transitions between the different power-saving modes 54₁, 54₂.

Examples of suitable user input commands include a tap gesture, a multi-tap gesture, a touch and hold gesture or some other touch or proximal gesture or combination of touch or proximal gestures at one or both of the wireless apparatuses 20. In some examples, the user input commands can be made at one of the wireless apparatus 20, or at either or both of the wireless apparatus 20. Additionally or alternatively, the user input commands can be made at the third apparatus 30.

In some examples, a user input command only has a period during which it is valid after a transition to a mode. For example, only within a few seconds of a differential audio output indication 64 of a change in mode.

In some examples, a user input command additionally automatically rewinds the audio content. Thus, if the system 10 switches to the (mono) power-saving mode 54, the user can switch back to the (stereo) first mode 52 and not miss any content in stereo format.

In some examples, the same user input command can have a different effect depending on the audio content being rendered. For example, the same input command gesture can have a different effect depending on whether the audio content is stereo or mono. For example, the same input command gesture can have a different effect depending on whether the audio content is a live (real-time) stream or recorded audio.

In one example, when the system 10 is live streaming a spatial audio call (e.g., using 3GPP IVAS), and transitions from the first mode 52 (spatial audio) to the power-saving mode 54 (mono audio), the system implements a user-selectable temporary override via a "push-to-listen" (PTL) user input command. The user 40 directly controls a duration of a temporary return to the first mode 52 (spatial playback) by activating a user input device 26 on the wireless apparatus 20 that is non-operational. The user 40 may temporarily resume listening the audio in full 360 spatial format while continuing the user input command.

In another example, when the system is not live streaming but is rendering non-live, recorded content such as, for example, a podcast or other recorded programme, and transitions from the first mode 52 (spatial audio) to the power-saving mode 54 (mono audio), the system 10 implements a temporary override and rewind via an "extended double tap" (or other gesture) on the wireless apparatus 20 that is non-operational to rewind the content and then listen to it in first mode 52 (spatial mode). Here, the user 40, e.g., first taps on the wireless apparatus 20 and then holds onto the wireless apparatus 20 on the second tap.

In at least some examples, in the absence of a user input command after the differential audio output indication 64, on entering the power-saving mode 54, the audio output of the wireless apparatus 20 that is non-operational (non-communicating) is faded out and at least a radio transceiver 21 of the non-operational wireless apparatus 20 enters a power-saving mode 54.

The system 10 is configured to co-ordinate operation of the first wireless apparatus 20₁, the second wireless apparatus 20₂ and the third apparatus 30. Any suitable form of wireless communication can be used, for example low power radio communication.

In some but not necessarily all examples Bluetooth technology can be used to form a network (piconet) comprising the first wireless apparatus 20₁, the second wireless apparatus 20₂ and the third apparatus 30.

For example, the first wireless apparatus 20₁, the second wireless apparatus 20₂ and the third apparatus 30 can wirelessly communicate using the Industrial, Scientific, Medical (ISM) radio band at 2.4Ghz.

For example, the first wireless apparatus 20₁, the second wireless apparatus 20₂ and the third apparatus 30 can wirelessly communicate using a fast frequency-hopping packet communication protocol time synchronized to a clock of a Master in a network comprising the Master and multiple Slaves.

For example, audio content can be communicated to the first wireless apparatus 20₁, and/or the second wireless apparatus 20₂ from the third apparatus 30 via a synchronous communication protocol that uses guaranteed time slots.

In at least some examples, in the power-saving mode 54, the operational wireless apparatus 20 maintains synchronous communication and network time synchronization and the non-operational wireless apparatus 20 does not maintain synchronous communication and maintains network synchronization.

In at least some examples, in the power-saving mode 54, the operational wireless apparatus 20 and the non-operational wireless apparatus 20 both maintain a cycle of listening for communications from the third apparatus 30, however the cycle maintained by the operational wireless apparatus 20 is more frequent than the cycle maintained by the non-operational wireless apparatus 20.

In at least some examples, in the power-saving mode 54, the non-operational wireless apparatus 20 maintains a programmable cycle of listening for communications from the third apparatus 30.

In at least some examples, in the power-saving mode 54, the non-operational wireless apparatus 20 does not maintain a network (MAC) address and listens at beacon instants.

In at least some examples, in the power-saving mode 54, an operational wireless apparatus 20 uses a higher power oscillator (within radio transceiver 21) to maintain accurate time synchronisation and a non-operational wireless apparatus 20 uses a lower power oscillator (within radio transceiver 21). The operational wireless apparatus 20 becomes non-operational by switching from using the higher power oscillator to using the lower power oscillator.

In at least some examples, in the power-saving mode 54, the operational wireless apparatus 20 uses a larger packet size, more frequently, and the non-operational wireless apparatus 20 uses a smaller packet, less frequently.

In at least some examples, in the power-saving mode 54, the non-operational wireless apparatus 20 enters a low power mode defined by a telecommunication standard, for example, a SNIFF, HOLD, or PARK mode defined by Bluetooth™.

FIG 7 is a simple illustration of the methods previously described. The method 200 comprises:
at block 202, enabling a first mode, in which:
   a first wireless apparatus wirelessly communicates with a third apparatus, either directly or via a second wireless apparatus, to receive first audio content and to provide audio output, dependent upon the received first audio content, to a first ear of a user, and
   a second wireless apparatus wirelessly communicates with the third apparatus, either directly or via the first wireless apparatus, to receive second audio content and to provide audio output, dependent upon the received second audio content, to a second ear of the user;
at block 204 switching from the first mode to the power-saving mode;
at block 206, enabling the power-saving mode, in which:
   only one of the first wireless apparatus and the second wireless apparatus wirelessly communicates with the third apparatus to receive audio content and to provide audio output, dependent upon the received audio content to a respective ear of the user.

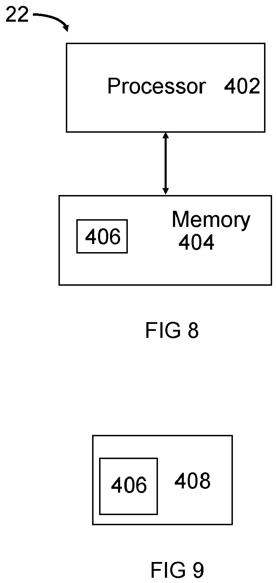

FIG 8 illustrates an example of a controller 22. Implementation of a controller 22 may be as controller circuitry. The controller 22 may be implemented in hardware alone, have certain aspects in software including firmware alone or can be a combination of hardware and software (including firmware).

As illustrated in FIG 8 the controller 22 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the wireless apparatus 20 when loaded into the processor 402. The computer program instructions, of the computer program 406, provide the logic and routines that enables the apparatus to perform the methods illustrated in FIG 7. The processor 402 by reading the memory 404 is able to load and execute the computer program 406.

The wireless apparatus 20 therefore comprises:
at least one processor 402; and
at least one memory 404 including computer program code
the at least one memory 404 and the computer program code configured to, with the at least one processor 402, cause the wireless apparatus 20 at least to perform:
   enabling a first mode, in which:
      a first wireless apparatus wirelessly communicates with a third apparatus, either directly or via a second wireless apparatus, to receive first audio content and to provide audio output, dependent upon the received first audio content, to a first ear of a user, and
      a second wireless apparatus wirelessly communicates with the third apparatus, either directly or via the first wireless apparatus, to receive second audio content and to provide audio output, dependent upon the received second audio content, to a second ear of the user;
   switching from the first mode to the power-saving mode;
   enabling the power-saving mode, in which:
      only one of the first wireless apparatus and the second wireless apparatus wirelessly communicates with the third apparatus to receive audio content and to provide audio output, dependent upon the received audio content to a respective ear of the user.

As illustrated in FIG 9, the computer program 406 may arrive at the wireless apparatus 20 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 406. The delivery mechanism may be a signal configured to reliably transfer the computer program 406. The wireless apparatus 20 may propagate or transmit the computer program 406 as a computer data signal.

Computer program instructions for causing a system to perform at least the following or for performing at least the following:
in a first mode,
enabling a first wireless apparatus to wirelessly communicate with a third apparatus, either directly or via a second wireless apparatus, to receive first audio content and to provide audio output, dependent upon the received first audio content, to a first ear of a user, and
enabling a second wireless apparatus to wirelessly communicate with the third apparatus, either directly or via the first wireless apparatus, to receive second audio content and to provide audio output, dependent upon the received second audio content, to a second ear of the user; switch from the first mode to the power-saving mode to save power in which only one of the first wireless apparatus and the second wireless apparatus wirelessly communicates with the third apparatus to receive audio content and to provide audio output, dependent upon the received audio content to a respective ear of the user.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the FIG 7 may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The above described examples find application as enabling components of:
automotive systems; telecommunication systems; electronic systems including consumer electronic products; distributed computing systems; media systems for generating or
rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks;
ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A system comprising:
a first wireless apparatus;
a second wireless apparatus;
wherein the first wireless apparatus is configured, at least, to wirelessly communicate with a third apparatus, either directly or via the second wireless apparatus, to receive first audio content and to provide audio output, dependent upon the received first audio content, to a first ear of a user;
wherein the second wireless apparatus is configured at least to wirelessly communicate with the third apparatus, either directly or via the first wireless apparatus, to receive second audio content and to provide audio output, dependent upon the received second audio content, to a second ear of the user;
wherein in a first mode the first wireless apparatus wirelessly communicates with the third apparatus, either directly or via the second wireless apparatus, to receive first audio content and to provide audio output, dependent upon the received first audio content and the second wireless apparatus wirelessly communicates with the third apparatus, either directly or via the first wireless apparatus, to receive second audio content and to provide audio output, dependent upon the received second audio content;
wherein in a power-saving mode only one of the first wireless apparatus and the second wireless apparatus wirelessly communicates with the third apparatus to receive audio content and to provide audio output, dependent upon the received audio content; and
wherein the system is configured to switch from the first mode to the second power-saving mode to save power.

2. A system as claimed in claim 1,
wherein the first wireless apparatus comprises a first energy store for powering the first wireless apparatus;
wherein the second wireless apparatus comprises a second energy store for powering the second wireless apparatus;
wherein the switch to the power-saving mode reduces power consumption in one of the first and second wireless apparatuses more than the other one of the first and second wireless apparatuses by at least reducing power consumed for wireless communication.

3. A system as claimed in claim 2, configured to select which of the first wireless apparatus and the second wireless apparatus wirelessly communicates, in the power-saving mode, with the third apparatus to receive audio content and to provide audio output, dependent upon the received audio content, wherein the selection is dependent upon a monitored storage value for the first energy store and a monitored storage value for the second energy store.

4. A system as claimed in claim 2 or 3 configured to:
initially select one of the first wireless apparatus and the second wireless apparatus to wirelessly communicate with the third apparatus to receive audio content and to provide audio output, dependent upon the received audio content, in the power-saving mode; and
subsequently select the other one of the first wireless apparatus and the second wireless apparatus to wirelessly communicate with the third apparatus to receive audio content and to provide audio output, dependent upon the received audio content, in the power-saving mode, wherein one or both of the initial selection and the subsequent selection are dependent upon a monitored storage value for the first energy store and/or a monitored storage value for the second energy store.

5. A system as claimed in any preceding claim configured to provide, to the user, an audio output indicative of a change in mode from the first mode to the power-saving mode.

6. A system as claimed in any preceding claim configured to enable user input commands to at least partially control the power-saving mode and or a transition to or from the power-saving mode.

7. A system as claimed in any preceding claim configured to:
cancel or suspend a switch to the power-saving mode;
change a threshold criterion for a transition to the power-saving mode; or
select which of the first wireless apparatus and the second wireless apparatus wirelessly communicates, in the power-saving mode, with the third apparatus to receive audio content and to provide audio output, dependent upon the received audio content.

8. A system as claimed in claim 6 or 7, wherein on entering the power-saving mode, in the absence of a user input command, the one of the first wireless apparatus and the second wireless apparatus that does not wirelessly communicates with the third apparatus to receive audio content and to provide audio output, dependent upon the received audio content, is configured to fade out its audio output and to place its wireless transceiver in a low-power mode.

9. A system as claimed in any of claims 6 to 8, wherein the user input commands are dependent upon the first and/or second audio content.

10. A system as claimed in any of claims 6 to 9, wherein the user input commands enable the system to prevent a transition from the first mode to the power-saving mode or enables a transition from the power-saving mode back to the first mode.

11. A system as claimed in claim 10, wherein one user input command is a tap gesture within a threshold period of time after a transition from the first mode to the power-saving mode.

12. A system as claimed in claim 10 or 11, wherein one user input command is a touch-and-hold gesture.

13. A system as claimed in any preceding claim, wherein the first wireless apparatus is a wireless bud comprising a housing shaped and configured for placement at least partially within an ear canal of a user and wherein the second wireless apparatus is a wireless bud comprising as a housing shaped and configured for placement at least partially with an ear canal of a user.

14. A system as claimed in any preceding claim
wherein, in the power-saving mode, an operational one of the first wireless apparatus and the second wireless apparatus wirelessly communicates with the third apparatus to receive audio content and to provide audio output, dependent upon the received audio content and the other non-operational one of the first wireless apparatus and the second wireless apparatus does not wirelessly communicate with the third apparatus to receive audio content and does not provide audio output, dependent upon the received audio content
wherein
the operational wireless apparatus maintains synchronous communication and network synchronization
and wherein the non-operational wireless apparatus does not maintain synchronous communication and maintains network synchronization;

15. Program instructions for causing an apparatus to perform at least the following:
in a first mode,
enabling a first wireless apparatus to wirelessly communicate with a third apparatus, either directly or via a second wireless apparatus, to receive first audio content and to provide audio output, dependent upon the received first audio content, to a first ear of a user, and
enabling a second wireless apparatus to wirelessly communicate with the third apparatus, either directly or via the first wireless apparatus, to receive second audio content and to provide audio output, dependent upon the received second audio content, to a second ear of the user; switch from the first mode to the second power-saving mode to save power in which only one of the first wireless apparatus and the second wireless apparatus wirelessly communicates with the third apparatus to receive audio content and to provide audio output, dependent upon the received audio content to a respective ear of the user.

16. A wireless apparatus for use in the system as claimed in any of claims 1 to 14, comprising means for:
enabling an operational state in which the wireless apparatus wirelessly communicates with the third apparatus to receive first audio content and to provide audio output, dependent upon the received first audio content;
enabling a non-operational state in which the wireless apparatus does not wirelessly communicate with the third apparatus to receive first audio content and does not provide audio output, dependent upon the received first audio content;
switching from the operational state to the non-operational state to conserve stored energy during the power-saving mode; and
switching from the non-operational state, during the power-saving mode, to the operational state to maintain audio output.
